# EUROPÄISCHE PATENTANMELDUNG

(11) **EP 2 554 713 A1**
(43) Veröffentlichungstag der Anmeldung: **06.02.2013**
(21) Anmeldenummer: 11176113.6
(22) Anmeldetag: 01.08.2011
(51) Int. Cl.: C25B 1/10, C25B 15/02, C25B 15/08

(54) **Vorrichtung zur Aufarbeitung eines Produktstromes einer Elektrolyseanlage**

(71) Anmelder: SIEMENS AKTIENGESELLSCHAFT, 80333 München (DE)
(72) Erfinder: Bayer, Dietmar, 91336 Heroldsbach (DE); Becker, Ines, 90408 Nürnberg (DE); Cordes, Ralf, 91056 Erlangen (DE); Hertsch, Hagen, 91056 Erlangen (DE); Kühn, Carola, 90449 Nürnberg (DE); Straub, Werner, 91093 Hessdorf (DE)

(57) **Zusammenfassung**

Um einen hohen Reinheitsgrad der Elektrolyseprodukte zu gewährleisten ist eine Vorrichtung (2) zur Aufarbeitung eines Produktstromes (6) einer Elektrolyseanlage insbesondere zur Erzeugung von Wasserstoff und Sauerstoff vorgesehen. Die Vorrichtung (2) umfasst einen im Produktstrom (6) angeordneten Katalysator (8) zur katalytischen Verbrennung von im Produktstrom (6) enthaltenen Verunreinigungen.

## Beschreibung

Die Erfindung betrifft eine Vorrichtung zur Aufarbeitung eines Produktstromes einer Elektrolyseanlage. Die Erfindung betrifft weiterhin eine Elektrolyseanlage mit einer solchen Vorrichtung sowie ein Verfahren zur Aufarbeitung eines Produktstromes einer Elektrolyseanlage.

Wasserstoff wird heutzutage größtenteils mittels PEM-Elektrolyse erzeugt. Ein PEM-Elektrolyseur besteht aus einer protonendurchlässigen Polymermembran (Proton-Exchange-Membrane), die auf beiden Seiten von porösen Platinenelektroden kontaktiert wird. An diese wird eine äußere Spannung angelegt und auf der Anodenseite des Elektrolyseurs wird Wasser zugeführt. Durch die katalytische Wirkung des Platins wird das Wasser an der Anodenseite zersetzt. Es entstehen dabei Sauerstoff, freie Elektronen und positiv geladene Wasserstoffionen H⁺. Die Wasserstoffionen H⁺ diffundieren durch die protonenleitende Membran auf die Kathodenseite, wo sie mit den Elektronen aus dem äußeren Stromkreis zu Wasserstoffmolekülen H₂ kombinieren.

Im Betrieb von Elektrolyseanlagen, abhängig von der Prozessführung, können Verunreinigungen durch einen Restanteil des jeweiligen Produktpartners in den erzeugten Produktgasen Wasserstoff und Sauerstoff auftreten. Dieser, meist unerwünschte Restgehalt an Wasserstoff im Sauerstoffstrom bzw. an Sauerstoff im Wasserstoffstrom, vermindert die Qualität der Produkte. Zu solchen Verunreinigungen kommt es bereits im Normalbetrieb durch Diffusion von Wasserstoff und Sauerstoff. Durch bestimmte prozessspezifische Betriebsbedingungen wird der Verunreinigungsprozess verstärkt, so dass es durch zusätzliche Unregelmäßigkeiten im Elektrolysebetrieb zu einer deutlichen Erhöhung dieser Restbestandteile kommen kann. Im Extremfall eines Membranbruchs werden dabei exklusive Gasgemische gebildet. Dies führt zu deutlichen Qualitätsverlusten und insbesondere zu gefährlichen Betriebsbedingungen, die aus sicherheitstechnischen Gründen vermieden werden müssen.

Bisher wurde der Reinheit der erzeugten Produktgase nur eine untergeordnete Rolle beigemessen. Die Produktgase wurden in einem separaten, zusätzlichen Prozessschritt speziellen Gasreinigungsschritten unterzogen. Verlässliche qualitative Produktgasüberwachungen konnten dabei nur diskontinuierlich, z.B. durch relativ aufwändige Gaschromatographie-(GC)-Messungen, durchgeführt werden.

Durch die wachsende Bedeutung der Energiespeicherung gewinnt die Anwendung von Wasserstoff, insbesondere erzeugt durch technisch umweltfreundliche Verfahren, wie die Elektrolyse, immer mehr an Bedeutung, so dass für die weitere Anwendung der erzeugten Elektrolysegase eine Qualitätsverbesserung ohne einen separaten, kostenaufwändigen Reinigungsschritt, begleitet von einer aufwändigen Qualitätsüberwachung erforderlich ist.

Die Erkennung von Unregelmäßigkeiten im Betriebsverhalten der Elektrolyseanlage bzw. die Erkennung eines Membranbruchs wurde bisher durch Unregelmäßigkeiten der Zellspannungen detektiert. Dies ist je nach Betriebsweise jedoch nur bedingt möglich und kann nicht immer zeitnah und eindeutig beobachtet werden, da die Zelle, selbst bei einem Membranbruch, weiterhin funktionsfähig bleibt. Erst nach einer gewissen Zeit und einer deutlichen Leckage, bei der ein zündfähiges Gemisch gebildet wird, war es bisher möglich, durch Messung der Zellspannung und/oder durch eine Temperaturerhöhung des Prozessumlaufwassers, hervorgerufen durch eine exotherme Rekombination von Wasserstoff und Sauerstoff, einen Membranbruch zu erkennen. Eine solche Überwachung bei hohem Betriebsdruck bis ca. 100 bar ist nur mit sehr hohem technischem Aufwand realisierbar.

Der Erfindung liegt die Aufgabe zugrunde, einen hohen Reinheitsgrad der Elektrolyseprodukte zu gewährleisten.

Die Aufgabe wird erfindungsgemäß gelöst durch eine Vorrichtung zur Aufarbeitung eines Produktstromes einer Elektrolyseanlage insbesondere zur Erzeugung von Wasserstoff und Sauerstoff, umfassend einen im Produktstrom angeordneten Katalysator zur katalytischen Verbrennung von im Produktstrom enthaltenen Verunreinigungen.

Die Aufgabe wird weiterhin erfindungsgemäß gelöst durch eine Elektrolyseanlage mit einer solchen Vorrichtung.

Die Aufgabe wird zudem erfindungsgemäß gelöst durch ein Verfahren zur Aufarbeitung eines Produktstromes einer Elektrolyseanlage, wobei Verunreinigungen in einem Produktstrom mittels eines Katalysators katalytisch verbrannt werden.

Die in Bezug auf die Vorrichtung nachstehend aufgeführten Vorteile und bevorzugten Ausgestaltungen sind sinngemäß auf die Elektrolyseanlage und das Verfahren zu übertragen.

Die Erfindung sieht vor, einen Katalysator oder ein Katalysatorsystem direkt in den Produktgasleitungen der Elektrolyseanlage einzubauen. In diesem System wird eine kontinuierliche katalytische Verbrennung der Verunreinigungen durch das Fremdgas, sowohl auf der Wasserstoffseite als auch auf der Sauerstoffseite, vorgenommen, was zu einer sehr hohen Reinheit des jeweiligen Produkts führt. Unter Katalysator wird hierbei sowohl ein monolytischer Katalysatorkörper als auch ein mehrteiliges Katalysatorsystem, bestehend aus mehreren Katalysatoreinheiten oder -körpern, verstanden. Unter katalytischer Verbrennung wird die Reaktion zwischen Wasserstoff und Sauerstoff verstanden, bei der als Produkt Wasser entsteht. Diese Reaktion ist in der Regel durch eine hohe Aktivierungsenergie gekennzeichnet, so dass die Reaktionsgeschwindigkeit sehr gering ist. Die Anwesenheit des Katalysators setzt die Aktivierungsenergie derart herab, dass die Reaktion hinreichend schnell auch bei relativ niedrigen Temperaturen abläuft.

Bevorzugt umfasst die Vorrichtung eine Anzahl von Temperatursensoren zur Temperaturmessung im Katalysator sowie eine Analyseeinheit zur Auswertung der Temperaturmessung zur Erfassung von Unregelmäßigkeiten im Betrieb der Elektrolyseanlage, d.h. dass eine Temperatur des Produktstromes im Katalysator gemessen wird und die Temperaturmessung zur Erfassung von Unregelmäßigkeiten im Betrieb der Elektrolyseanlage ausgewertet wird. Durch die Verwendung von einem oder mehreren Temperatursensoren wird ein zeitliches Temperaturprofil erhalten, das Rückschlüsse auf die Funktionsfähigkeit bzw. den Verschleißzustand des Katalysators ziehen lässt. Dank der im Katalysator verteilten Temperatursensoren und einer geeigneten Zuordnung zwischen den gemessenen Temperaturen bzw. Temperaturdifferenzen und deren Abhängigkeit vom Fremdgasanteil, ist es letztendlich möglich, den Anteil der Verunreinigungen quantitativ zu ermitteln. Die Messsignale der Temperatursensoren werden von der Analyseeinheit ausgewertet, wodurch Informationen über die exotherme Rekombination von Wasserstoff und Sauerstoff geliefert werden. Dies ermöglicht eine äußerst schnelle Erkennung der anlagenspezifischen Unregelmäßigkeiten, insbesondere Membranbrüche.

Nach einer bevorzugten Ausgestaltung sind mehrere Temperatursensoren vorgesehen, die an unterschiedlichen Stellen in Stromrichtung des Produktgasstroms angeordnet sind. Dadurch wird ein Temperaturnetzwerk aufgebaut, welches umfangreiche Informationen über die im Katalysator ablaufende katalytische Verbrennung liefern.

Nach einer weiteren bevorzugten Ausgestaltung ist dem Katalysator in Richtung des Produktstroms eine Trockenkammer nachgeschaltet. Über die Trockenkammer wird die bei der Rekombination erzeugte Feuchte in einem Trocknungsmittel gespeichert, so dass eine unerwünschte Feuchte im Produktgas vermieden wird. Die Trockenkammer ist vorteilhaftersweise austauschbar, so dass ein effizientes Entziehen der Feuchte aus dem Produktgas gewährleistet ist, auch wenn die Trockenkammer die maximale Menge an Wasser aufgenommen hat, indem die Trockenkammer durch eine andere ersetzt wird.

Vorzugsweise ist der Katalysator aufheizbar. Der Katalysator kann somit auf eine optimale Betriebstemperatur aufgeheizt werden. Die Temperatur, auf welche der Katalysator vorgeheizt wird, wird entsprechend bei der Auswertung der Temperaturmessung mit Hilfe der Temperatursensoren berücksichtigt.

Gemäß einer bevorzugten Variante umfasst der Katalysator einen Träger mit einer porösen Oberfläche, der insbesondere als ein Molekularsieb ausgebildet ist. Ein solcher Träger besitzt die vorteilhafte Eigenschaft, dass er das bei der katalytischen Verbrennung entstehende Wasser speichern kann, so dass die Feuchte des Produktstromes unwesentlich beeinflusst wird. Mit Molekularsieb werden hierbei natürliche oder synthetische Zeolithe bezeichnet, die Stoffe mit bestimmten Molekülgrößen absorbieren. Auf diese Weise ist es möglich, die Wassermoleküle vom restlichen Produktgas zu trennen.

Gemäß einer bevorzugten alternativen Variante umfasst der Katalysator einen mehrstückigen Träger, der insbesondere als Kugel, Pellet, Tablette oder Schüttgut ausgebildet ist. Durch die Hohlräume zwischen den einzelnen Trägereinheiten ist diese Form des Katalysators ebenfalls durch eine gewisse Porosität gekennzeichnet, so dass das Produktgas ungehindert durch den Katalysator strömt.

Vorzugsweise enthält der Katalysator Platin, Palladium, Ruthenium, Rhodium, etc. Als Katalysatormaterial sind dabei alle gängigen Materialien erdenklich, welche die katalytische Verbrennung positiv beeinflussen können. Ein Platin-Katalysator weist eine ausgezeichnete Reaktionsaktivität auf und kann eine katalytische Verbrennung selbst dann bewirken, wenn die Umgebungstemperatur niedrig ist.

Bevorzugt umfasst die Vorrichtung zur Überwachung der Elektrolyseanlage ein Steuer- oder Regelsystem zum Einstellen von Betriebsparametern der Elektrolyseanlage. Durch die Vorgabe von betrieblichen Grenztemperaturen ist es somit zusätzlich möglich, über das Steuer- oder Regelsystem die Anlage sicherheitstechnisch automatisch zu steuern. Neben einer kontinuierlichen Sicherheitsüberwachung der Elektrolyseanlage ist die Vorrichtung zudem durch die Funktionalität gekennzeichnet, im Hinblick auf eine Vermeidung von Betriebsstörungen und Unfällen einen zeitrelevanten, steuerungstechnischen Eingriff in die Elektrolyseanlage vorzunehmen.

Katalysatoren für die katalytische Verbrennung von Wasserstoff sind bereits bekannt. Die Erfindung basiert auf der Überlegung, solche Katalysatoren in der Produktgasleitung einzubauen und insbesondere im Inneren des Katalysators die Temperatur zu messen, so dass Informationen über die exotherme Rekombination von Wasserstoff und Sauerstoff gewonnen und ausgewertet werden. Durch die Vorrichtung wird an erster Stelle sichergestellt, dass ein Produkt mit einer hohen Reinheit erzeugt wird, da nach der katalytischen Verbrennung nur noch Wasser und sortenreines Gas hoher Reinheit vorliegt. Andererseits ermöglicht die Vorrichtung durch eine einfache Temperaturmessung die Menge an Fremdgas im jeweiligen Produktstrom kontinuierlich und online zu überwachen und zu kontrollieren. Ebenso ist zusätzlich die Möglichkeit einer kontinuierlichen quantitativen Leckagedetektion gegeben.

Die Vorrichtung ist grundsätzlich für die Überwachung von unterschiedlichen Arten von Analyseanlagen geeignet, insbesondere wird die Vorrichtung jedoch bei einer Hochdruckelektrolyse mit einem Systemdruck von über 20 bar eingesetzt, da die Funktionsfähigkeit der Vorrichtung auch bei beliebig hohem Druck (z.B. 100 bar) gewährleistet ist.

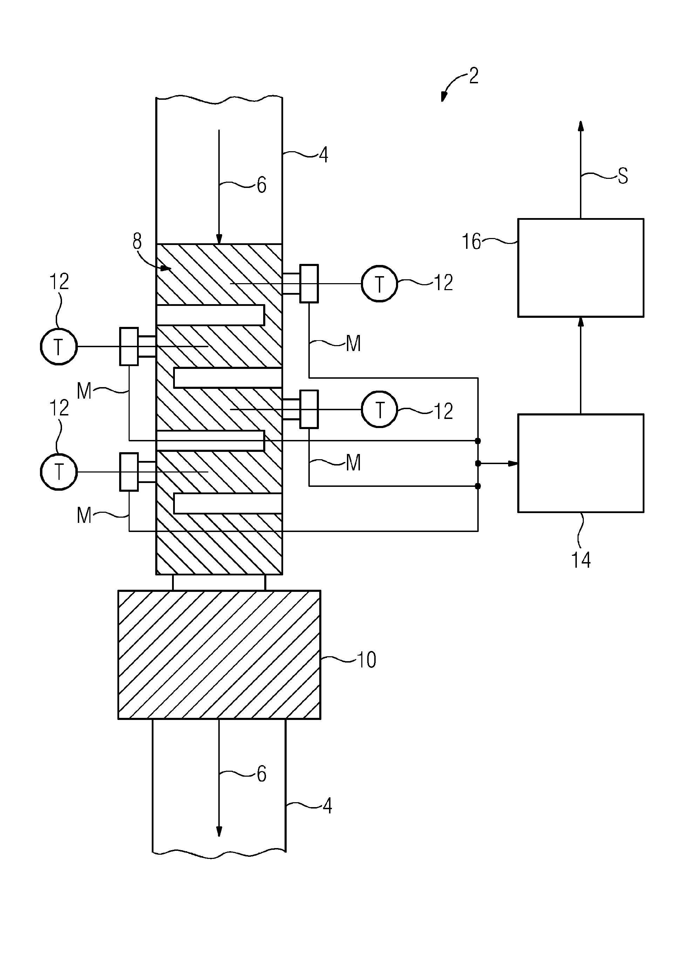

Ein Ausführungsbeispiel der Erfindung wird anhand einer Zeichnung näher erläutert. Hierin zeigt die einzige Figur eine Vorrichtung 2 zur Überwachung einer nicht näher gezeigten Elektrolyseanlage zur Erzeugung von Wasserstoff und Sauerstoff. Die Elektrolyseanlage ist eine Anlage für Hochdruckelektrolyse, bei der die Produkte mit einem hohen Gasdruck erzeugt werden. In der Elektrolyseanlage können dabei Betriebsdrücke von über 100 bar herrschen.

In der Figur ist lediglich eine Produktgasleitung 4 der Elektrolyseanlage gezeigt, nämlich die Wasserstoffleitung, durch welche ein Produktstrom, hier der Wasserstoffstrom aus einer Elektrolysezelle oder einem Elektrolysezellenstapel hinausgeführt wird. In der Elektrolyseanlage ist zudem eine zweite, insbesondere baugleiche Vorrichtung 8 zur Aufbereitung des Sauerstoffstromes vorgesehen, die in der Figur jedoch nicht gezeigt ist.

In der Leitung 4 ist ein Katalysator 8 integriert, der vom Wasserstoffstrom 6 durchströmt wird. Der Katalysator 8 umfasst einen nicht näher dargestellten Träger oder Substrat, das eine gewünschte Porosität aufweist. Der Katalysator 8 enthält zudem Platin, das eine katalytische Verbrennung von Wasserstoff und Sauerstoff, bei der der Wasserstoff und der Sauerstoff rekombiniert werden und Wasser entsteht, katalytisch begünstigt. Beim Durchströmen des Produktstroms 6 durch den Katalysator 8 wird somit gewährleistet, dass Verunreinigungen in Form von molekularem Sauerstoff, die im Wasserstoffstrom 6 enthalten sind, im Rahmen der katalytischen Verbrennung beseitigt werden, indem der Sauerstoff mit Wasserstoff rekombiniert wird.

In einem weiteren Schritt stromab wird das Wasser aus dem Wasserstoffstrom 6 entfernt, indem der Wasserstoffstrom 6 in eine Trockenkammer 10 eingeleitet wird. Das Wasser bleibt dabei in der Trockenkammer 10 gespeichert, so dass der Wasserstoffstrom 6 nach der Trockenkammer 10 eine sehr hohe Reinheit aufweist.

Mit Hilfe von Temperatursensoren 12, die stromab an unterschiedlichen Stellen angeordnet sind, wird die Temperatur im Katalysator 8 gemessen. Ein Messsignal M der Temperatursensoren 12 wird einer Analyseeinheit 14 zugeführt. Über die Temperaturmessung wird somit die Rekombination von Wasserstoff und Sauerstoff im Katalysator 8, bei welcher Wärme erzeugt wird, von der Analyseeinheit 14 quantitativ erfasst. Die Information aus den Temperaturmessungen dient dazu, Unregelmäßigkeiten im Betrieb der Elektrolyseanlage zu detektieren und auszuwerten. Die Messwerte M werden dabei mit vorgegebenen Grenzwerten für die zulässige Temperatur verglichen. Wenn die zulässigen Grenzwerte überschritten sind, könnte dies auf einen Membranbruch in der Elektrolyseanlage deuten. In diesem Fall sind unverzügliche Sicherheitsmaßnahmen erforderlich, da bei einem Membranbruch explosive Gasgemische entstehen.

Als Reaktion auf einen Temperaturanstieg im Katalysator 8 wird von einem Steuersystem 16, das datentechnisch mit der Analyseeinheit 14 verbunden ist, ein Steuersignal S generiert, welches eine Änderung bestimmter Betriebsfunktionen der Elektrolyseanlage bewirkt, um erhebliche Betriebsstörungen zu unterbinden. Beispielsweise wird die Wasserzufuhr zur Anode reduziert oder unterbrochen.

Die Vorrichtung 2 zeichnet sich somit im Wesentlichen durch zwei Funktionen aus. Zum einen erfolgt im Katalysator 8 eine Reinigung des Produktgases 6 durch Abreaktion mit herstellungsbedingten Sauerstoff-Verunreinigungen. Die quantitative Information über die im Katalysator 8 ablaufenden Rekombinationsprozesse wird zudem ausgewertet und zu einer Überwachung des Betriebsverhaltens der Elektrolyseanlage herangezogen. Zusätzlich ist durch das Steuersystem 16 die Möglichkeit gegeben, die in der Elektrolyseanlage ablaufenden Prozesse zu regulieren, wenn bei der katalytischen Verbrennung von Sauerstoff und Wasserstoff wesentliche Unregelmäßigkeiten in der Zusammensetzung des Produktstromes 6 festgestellt werden.

## Patentansprüche

1. Vorrichtung (2) zur Aufarbeitung eines Produktstromes (6) einer Elektrolyseanlage insbesondere zur Erzeugung von Wasserstoff und Sauerstoff, umfassend einen im Produktstrom (6) angeordneten Katalysator (8) zur katalytischen Verbrennung von im Produktstrom (6) enthaltenen Verunreinigungen.

2. Vorrichtung (2) nach Anspruch 1,
umfassend eine Anzahl von Temperatursensoren (12) zur Temperaturmessung im Katalysator (8) sowie eine Analyseeinheit (14) zur Auswertung der Temperaturmessung zur Erfassung von Unregelmäßigkeiten im Betrieb der Elektrolyseanlage.

3. Vorrichtung (2) nach Anspruch 2,
wobei mehrere Temperatursensoren (12) vorgesehen sind, die an unterschiedlichen Stellen in Stromrichtung des Produktstroms (6) angeordnet sind.

4. Vorrichtung (2) nach einem der vorhergehenden Ansprüche, wobei dem Katalysator (8) in Richtung des Produktstroms (6) eine Trockenkammer (10) nachgeschaltet ist.

5. Vorrichtung (2) nach Anspruch 4,
wobei die Trockenkammer (10) austauschbar ist.

6. Vorrichtung (2) nach einem der vorhergehenden Ansprüche, wobei der Katalysator (8) aufheizbar ist.

7. Vorrichtung (2) nach einem der vorhergehenden Ansprüche, wobei der Katalysator (8) einen Träger mit einer porösen Oberfläche umfasst.

8. Vorrichtung (2) nach einem der vorhergehenden Ansprüche, wobei der Katalysator (8) einen mehrstückigen Träger, insbesondere nach Art von Kugeln, Pellets, Tabletten oder Schüttgut, umfasst.

9. Vorrichtung (2) nach einem der vorhergehenden Ansprüche, wobei der Katalysator (8) Pt, Pd, Ru oder Rh enthält.

10. Vorrichtung (2) nach einem der vorhergehenden Ansprüche, umfassend ein Steuer- oder Regelsystem (16) zum Einstellen von Betriebsparametern der Elektrolyseanlage.

11. Elektrolyseanlage mit einer Vorrichtung (2) nach einem der vorhergehenden Ansprüche.

12. Elektrolyseanlage nach Anspruch 11, die für eine Hochdruckelektrolyse ausgebildet ist.

13. Verfahren zur Aufarbeitung eines Produktstromes (6) einer Elektrolyseanlage, wobei Verunreinigungen in einem Produktstrom (6) mittels eines Katalysators (8) katalytisch verbrannt werden.

14. Verfahren nach Anspruch 13, wobei eine Temperatur des Produktstromes (6) im Katalysator (8) gemessen wird und die Temperaturmessung zur Erfassung von Unregelmäßigkeiten im Betrieb der Elektrolyseanlage ausgewertet wird.
